# EUROPEAN PATENT SPECIFICATION

(11) **EP 0 557 755 B1**
(45) Date of publication and mention of the grant of the patent: **29.09.1999**
(21) Application number: 93101733.9
(22) Date of filing: 04.02.1993
(51) Int. Cl.: A01K 1/015, E04F 15/02, B32B 7/02

(54) **Mat for stock-raising**
Matte für die Aufzucht von Tieren
Tapis pour l'élevage du bétail

(30) Priority: 24.02.1992 JP 1722492 U; 21.07.1992 JP 5682792 U
(43) Date of publication of application: 01.09.1993
(73) Proprietor: Kanesaka, Ichiro, Nerima-ku Tokyo (JP)
(72) Inventor: Kanesaka, Ichiro, Nerima-ku Tokyo (JP)
(74) Representative: Weser, Wolfgang

(56) References cited:
- DE-U- 7 637 869
- GB-A- 2 057 354

## Description

### BACKGROUND OF THE INVENTION

### Field of the Invention

The present invention relates to an improved mat for stock-raising and, more particularly, relates to a mat for stock-raising having high heating effect on stock-raising animals.

### Description of the Prior Art

In stock-raising facilities the animals being raised need to be kept at an elevated desired temperature. In hog raising, for example, as a warming of the pigs being bred in a pigpen is very important, the inside of the pigpen should be maintained at a fixed temperature at any time.

Therefore, the inside of a pigpen is usually heated thoroughly by heating means such as gas heaters.

However, a high heating efficiency has not been obtained because the heat radiated from gas heater and from the pigs due to their higher body temperature dissipates through the floor of the pigpen. Therefore, there is a problem that the heating equipment must provide for a heavy load in order to maintain the desired temperature in the pigpen.

GB-A-2 057 354 discloses a mat for stock-raising in sandwich construction comprising a thermally insulating central block of rubberised cork granules and two outer skin layers of tough rubber, with zinc oxide being used as an additive to the rubber composition used for the central block and the two outer skin layers.

### SUMMARY OF THE INVENTION

An object of the present invention is to provide an improved mat for stock-raising having an enhanced efficiency of heating for stock-raising animals.

This object is attained by the features delineated in claim 1. Advantageous developments of the invention are specified in the subclaims.

### BRIEF DESCRIPTION OF THE DRAWINGS

- FIG. 1: is a cross-sectional view showing a first embodiment of the mat for stock-raising according to the invention;
- FIG. 2: is a diagram showing the mat of FIG. 1 when used;
- FIG. 3: is a cross-sectional view showing another embodiment of the mat for stock-raising according to the invention;
- FIG. 4: is a cross-sectional view showing a third embodiment of the mat for stock-raising according to the invention; and
- FIG. 5: is a diagram showing the mat of FIG. 4 when used.

### DESCRIPTION OF THE PREFERRED EMB0DIMENTS

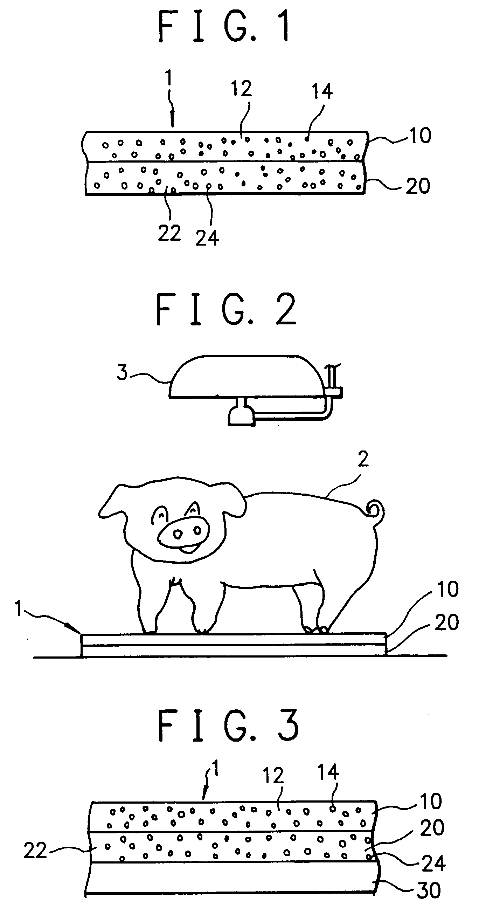

As shown in FIG. 1, the mat 1 comprises an upper rubber layer 10 and a lower rubber layer 20. The upper rubber layer 10 is composed primarily of rubber to which a powder of multi-functional ceramics 14 being able to deliver far-infrared radiation has been admixed. Particles of silica (SiO2), magnesia (MgO), alumina (Al203), titania (Ti02) and the other inorganic materials specified in claim 1 may be used for said ceramics. The lower rubber layer 20 is highly reflective against radiated heat and contains primarily rubber 22 to which aluminium powder 24, for example, is added.

The lower rubber layer 20 can be also prepared as low conductive heat absorbent layer. Various types of insulative materials such as foamed styrene, urethane, honeycomb-shaped materials, calk and plywood can be used as a low conductive heat absorbent layer. Although the upper rubber layer 10 and lower rubber layer 20 are primarily composed of rubber in the above examples, other materials having appropriate elasticity can be used and it will be possible to add the powder of multi-functional ceramics 14 and aluminium powder 24 described above there. For example, this mat can be formed to the size of 60 cm width, 90 cm length and 5 mm thickness.

When using, the mat 1 is laid, upper rubber layer 10 side up, in the inside of pigpen, and pig 2 is bred on the mat 1 laid.

During the breeding of pig 2 on the mat 1 laid in the pigpen, the powder of multi-functional ceramics 14 contained in the upper rubber layer 10 absorbs the heat radiated from gas heater 3 and reaching the mat 1, as well as the heat emitted from pig 2, and re-emits far-infrared radiation to provide an efficient heating for pigs. Further, the multi-functional ceramics powder 14 has an antibacterial effectiveness, so that it would prevent a bacterial spoiling in the pigpen. Furthermore, the deodorant property derived from the multi-functional ceramics powder 14 can maintain cleanness of the environment in the pigpen.

Further, since the aluminium powder 24 contained in the lower rubber layer 20 has a property of high reflectivity for radiated heat, it can reflect the heat coming from the upper layer side of the mat 1 to the lower layer side and can prevent the loss of heat which would occur at the lower layer side of the mat 1. It is also possible to prevent a spreading of heat from the upper layer to floor when using the materials which have low absorbing property for conduction heat instead of the lower rubber layer 20.

In FIG. 3 another embodiment of the present invention is illustrated. In this example, the underside of the lower rubber layer 20 is further laminated with anticorrosive layer 30. According to this mat, the corrosion of the mats caused by the effects of the floor plane can be prevented, because layer 30 has a resistance against the corrosion caused by ammonia and so on contained in the feces and the like of the animals.

According to the use of the mats specified in this invention, an efficient heating of the animals bred on the mats is possible as far-infrared radiation is radiated from the multi-functional ceramics contained in the upper rubber layer, and the heat from the upper rubber layer side is reflected by the low heat-absorbing materials or high heat-reflecting materials contained in the lower rubber layer.

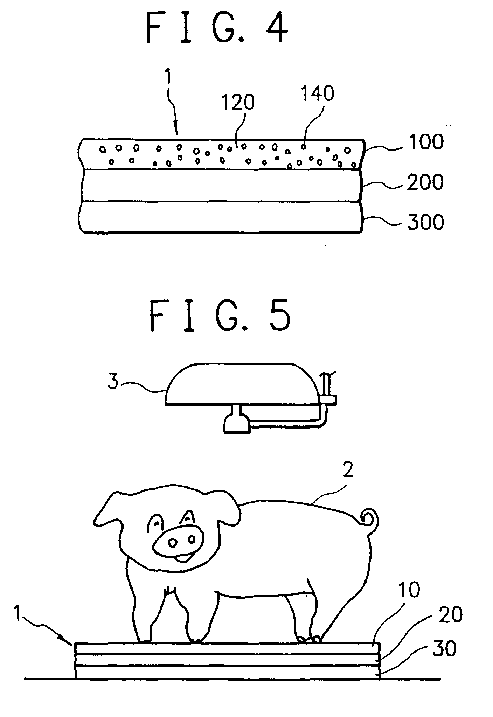

In FIG. 4, the cross-sectional view of a third embodiment of the mat for stock-raising of the present invention is illustrated. The mat 1 comprises a laminate of an upper layer 100, middle layer 200 and lower layer 300.

The upper layer 100 primarily contains rubber 120 to which there is admixed a functional ceramics powder (multi-functional ceramics) 140 able to deliver far-infrared radiation, with one or more than 2 inorganic materials in particles, selected from the group comprising silica, alumina, magnesia, titania, iron oxide, hornblende, phyllite, serpentine, tuff, turmalin, zeolite and mica, being used for said ceramics. As a functional ceramics, antibacterial ceramics, deodorant ceramics or ceramics having both of these properties can be advantageously used.

In this example, though the upper layer 100 primarily contains rubber, it is possible to replace it with other materials having appropriate elasticity and to which the functional ceramics powder 140 described above can be further added.

The middle layer 200 is formed with a material having insulating effect. Various types of materials having low heat conduction property and insulating effect, for example, foamed plastics such as hard polyurethane foam, foamed polyethylene, foamed styrene₁ honecomb-shaped materials, calk board, plywood, aluminium foil, wool felt, rubber and the like. Of these materials, hard polyurethane and foamed polyethylene are particularly preferable because of their high insulative property.

The lower layer 300 is a protective layer for the middle layer 200. The lower layer 300 is preferably formed as a layer having anticorrosive property, for example.

This mat can be formed in the size of about 60 cm width, 90 cm length and 5 mm thickness, for example.

The mat 1 is laid so as to set the upper layer 100 upward as shown in FIG. 5, and the pig 2 is bred on the mat 1 laid in the pigpen.

During the breeding of pig 2 on the mat 1 laid in the pigpen, the functional ceramics powder 140 contained in the upper layer 100 absorbs the heat radiated from gas heater 3 and reaching into the mat 1, as well as the heat emitted from pig 2, re-emits a far-infrared radiation which provides an efficient heating for pigs. Further, as the functional ceramics powder 140 has antibacterial property, the installation of this mat is preferred for a prevention of epidemics in the pigpen. Furthermore, because of the deodorant property of the functional ceramics powder, the mats of this invention can provide contribution for the maintenance of a pleasant environment inside and outside of the stock-raising facilities.

On the other hand, the middle plane layer 200 can prevent a heat spreading from the upper layer of the mat 1 to the lower layer side of the mat 1, whereby the temperature of the upper layer can be effectively maintained high.

Furthermore, when a material having anticorrosive property is used for the lower layer 300, it is possible to prevent the erosion caused by effects from the floor, because the material shows resistance against erosion caused by ammonia and the like contained in the feces etc. of the animals.

A use of the mats specified in this invention allows to maintain high temperatures at the surface of the mat, such that an efficient heating of the animals bred on the mat becomes possible, because a far-infrared radiation is radiated from the functional ceramics contained in the upper layer, and a heat spreading down from the upper layer side is prevented by the material `in the middle layer having insulating property.

## Claims

1. A mat for stock-raising to be laid in stock-raising houses and used for heating stock-raising animals, comprising at least an animal supporting upper layer (10, 100) and a lower layer (20, 200) sandwiched together, wherein .
- the upper layer (10, 100) contains particles of ceramics able to deliver far-infrared radiation, selected from the group comprising silica, alumina, magnesia, titania, iron oxide, hornblende, phyllite, serpentine, tuff, turmalin, zeolite and mica, and
- the lower layer (20, 200) is formed of a heat insulating, heat reflecting or low heat absorbing material.

2. The mat according to claim 1, wherein
the upper layer (10, 100) primarily contains rubber.

3. The mat according to claim 1 or 2, wherein
the heat-reflecting material is aluminium.

4. The mat according to claim 1 or 2, wherein
the heat-insulating material is hard polyurethane, in particular in a foamed state.

5. The mat according to claim 1 or 2, wherein
the heat-insulating material is foamed polyethylene.

6. The mat according to any of claims 1 to 5, wherein
the ceramics of the upper layer (10, 100) has an antibacterial property.

7. The mat according to any of claims 1 to 6, wherein
the ceramics of the upper layer (10, 100) has a deodorant property.

8. The mat according to any of claims 1 to 7, wherein
the lower layer (20, 200) primarily contains rubber.

9. The mat according to any of claims 1 to 8,
further comprising
a layer (30, 300) for protecting the underside of the lower layer (20, 200).

10. The mat according to claim 9, wherein
the protecting layer is an anticorrosive layer (30, 300) laminated to the lower layer (20, 200).

## Patentansprüche

1. Matte zur Aufzucht von Tieren, einzulegen in Viehzuchtställe und verwendet zum Erwärmen von Zuchttieren, umfassend mindestens eine Tieraufnahme-Oberschicht (10, 100) und eine untere Schicht (20, 200), die übereinander liegen, wobei
- die obere Schicht (10, 100) Partikel einer Keramik enthält, die in der Lage sind, eine Strahlung im fernen Infrarot-Bereich abzugeben, ausgewählt aus der Gruppe Kieselerde, Aluminiumoxid, Magnesiumoxid, Titanoxid, Eisenoxid, Hornblende, Phyllit, Serpentin, Tuff, Turmalin, Zeolit und Glimmer, und
- die untere Schicht (20, 200) aus einem wärmeisolierenden, wärmereflektierenden oder schlecht wärmeabsorbierenden Material gebildet ist.

2. Matte nach Anspruch 1, bei der
die obere Schicht (10, 100) vornehmlich Gummi enthält.

3. Matte nach Anspruch 1 oder 2, bei der
das wärmereflektierende Material Aluminium ist.

4. Matte nach Anspruch 1 oder 2, bei der
das wärmeisolierende Material Hart-Polyurethan, insbesondere im aufgeschäumten Zustand, ist.

5. Matte nach Anspruch 1 oder 2, bei der
das wärmeisolierende Material aufgeschäumtes Polyethylen ist.

6. Matte nach einem der Ansprüche 1 bis 5, bei der
die Keramik der oberen Schicht (10, 100) antibakterielle Eigenschaften aufweist.

7. Matte nach einem der Ansprüche 1 bis 6, bei der
die Keramik der oberen Schicht (10, 100) Deodorant-Eigenschaft aufweist.

8. Matte nach einem der Ansprüche 1 bis 7, bei der
die untere Schicht (20, 200) vornehmlich Gummi enthält.

9. Matte nach einem der Ansprüche 1 bis 8, weiterhin umfassend eine Schicht (30, 300) zum Schützen der Unterseite der unteren Schicht (20, 200).

10. Matte nach Anspruch 9, bei der
die Schutzschicht eine Antikorrosionsschicht (30, 300) ist, die durch die untere Schicht (20, 200) auflaminiert ist.

## Revendications

1. Tapis pour l'élevage de bétail destiné à être posé dans des installations d'élevage de bétail et utilisé pour chauffer des animaux comprenant au moins une couche supérieure (10, 100) de support d'animal et une couche inférieure (20, 200) disposées en sandwich l'une avec l'autre, dans lequel :
- la couche supérieure (10. 100) contient des particules de céramique capables d'émettre un rayonnement infrarouge lointain, choisies parmi le groupe comprenant la silice, l'alumine, la magnésie, l'oxyde de titane, l'oxyde de fer, la hornblende, la phyllite, la serpentine, le tuf, la tourmaline, la zéolite et le mica, et
- la couche inférieure (20, 200) est formée d'une matière thermoisolante, renvoyant la chaleur ou absorbant faiblement la chaleur.

2. Tapis selon la revendication 1, dans lequel la couche supérieure (10, 100) contient principalement du caoutchouc.

3. Tapis selon la revendication 1 ou 2, dans lequel la matière renvoyant la chaleur est de l'aluminium.

4. Tapis selon la revendication 1 ou 2, dans lequel la matière thermoisolante est du polyuréthane dur, en particulier en mousse.

5. Tapis selon la revendication 1 ou 2, dans lequel la matière thermoisolante est du polyéthylène en mousse.

6. Tapis selon l'une quelconque des revendications 1 à 5, dans lequel la céramique de la couche supérieure (10, 100) a une propriété antibactérienne.

7. Tapis selon l'une quelconque des revendications 1 à 6, dans lequel la céramique de la couche supérieure (10, 100) a une propriété désodorisante.

8. Tapis selon l'une quelconque des revendications 1 à 7, dans lequel la couche inférieure (20, 200) contient principalement du caoutchouc.

9. Tapis selon l'une quelconque des revendications 1 à 8, comprenant de plus une couche (30, 300) pour protéger le dessous de la couche inférieure (20, 200).

10. Tapis selon la revendication 9, dans lequel la couche protectrice est une couche anti-corrosive (30,300) superposée à la couche inférieure (20, 200).
